# EUROPEAN PATENT SPECIFICATION

(11) **EP 0 500 358 B1**
(45) Date of publication and mention of the grant of the patent: **05.08.1998**
(21) Application number: 92301387.4
(22) Date of filing: 19.02.1992
(51) Int. Cl.: H04N 5/93, G11B 20/10, G11B 20/12, G11B 15/18

(54) **Signal processing method of digital VTR**
Signalverarbeitungsmethode in einem digital VTR
Méthode de traitement de signaux d'un VTR digital

(30) Priority: 19.02.1991 JP 24424/91
(43) Date of publication of application: 26.08.1992
(73) Proprietor: MATSUSHITA ELECTRIC INDUSTRIAL CO., LTD., Kadoma-shi, Osaka-fu 571 (JP)
(72) Inventor: Ohtaka, Hideki, Neyagawa-shi, Osaka-fu 572 (JP); Juri, Tatsuro, Osaka-shi, Osaka-fu 534 (JP); Kashiro, Takao, Moriguchi-shi, Osaka-fu 570 (JP)
(74) Representative: Crawford, Andrew Birkby

(56) References cited:
- EP-A- 0 341 790
- EP-A- 0 454 460
- DE-A- 4 032 971
- GB-A- 2 086 691
- US-A- 4 751 589
- US-A- 4 864 430

## Description

The present invention relates to a slow play method in a digital VTR for recording as digital signals.

Functions of digital VTR for digitizing audio signals and video signals, and recording on a tape as digital data include, aside from ordinary reproduction, trick play such as high speed play and slow play. In slow play, in particular, in order to reproduce each picture correctly, processing in the reproducing circuits is necessary. The slow play in the conventional digital VTR and its realization method are explained below.

In normal play, the head traces on one track, while in slow play the head traces by crossing over plural tracks, tracing the same track plural times. Therefore, by writing reproduction data sequentially into the memory, and changing over the output fields when the data for one field is written into the memory, the slow reproduction is realized. More specifically, having three memories (memory 1, memory 2, memory 3) with the capacity of one field each, two are used for writing, and one for reading. For example, if data of two fields A, B are mixed in the reproduction data, the data of field A is written in memory 1, and the data of field B in memory 2, and the remaining memory 3 reads out the data from other field in which data of one field has been already written. Afterwards, by sequentially reading out from the fields in which data of one field is written, the operation of slow reproduction is realized.

Such conventional constitution, however, involves the following problems.

In the digital VTR for broadcasting and professional use, considering the convenience for editing, data are recorded in field unit. In the household VTR, on the other hand, to record a long time in a small cassette, the quantity of information is reduced by high efficiency coding. In order to reduce the quantity of information efficiently without much deteriorating the picture quality, it is required to process by using plural fields, and to record in plural field units. In this case, if the data is detected and processed in plural field units at the time of slow play, a very large capacity of memory is required. Or when plural fields are repeatedly produced, a smooth slow play is not realized in a rapidly moving picture.

European Patent Application EP-A-0454460 discloses a video signal recording/reproducing apparatus which records pictures by compressing the video signal in multiple field units and reproduces the signal by an expansion process, and which continuously and repeatedly outputs each field of the reproduced televisions signal on the screen by use of a field detecting unit which operates to ensure that a reciprocal of the multiplication index of a desired reproducing speed is selected as a number of continuous reproduction of one field, and also by use of a change-over unit for changing over the reproduced signal in field units.

United States Patent US-A-4751589 relates to a process for reproducing recorded digital video signals which involves switching between a plurality of field memories into each of which one field of image data has been stored, whereby to retrieve the image data for reproduction. The method also relates to a process for detecting reversal of the drive direction of the tape, and for disabling the switching among field memories for a given period so as to hold the video image reproduced on a monitor unchanged.

European Patent Application EP-A-0341790 relates to a digital audio signal reproducing apparatus which changes the sequence of the reproduced data according to the running direction of the magnetic tape.

It is hence a primary object of the invention to present a signal processing method of digital VTR capable of realizing slow play in the field unit by a small memory capacity, in the digital VTR recorded by bit rate reduction in plural field units.

According to the present invention there is provided a method of reproducing a digital video signal from coded video data recorded on a recording medium, said coded video data having been obtained by joining every two fields of digital video signals into a frame of digital video signals and bit rate reduction coding the frame of digital video signals to be a frame of coded video data divided into recording blocks, said method comprising the steps of:
reproducing the coded video data from the recording medium on a recording block by recording block basis;
storing the reproduced recording blocks sequentially in a first memory;
decoding the reproduced recording blocks stored in the first memory to obtain reproduced digital video signals;
storing the reproduced digital video signals in a second memory;
detecting a timing at which recording blocks comprising a quantity of data corresponding to half a frame of coded video data has been reproduced from the recording medium in a slow motion reproduction mode; and
controlling the second memory to output one field of reproduced digital signals repeatedly from said second memory, until said timing detected by the detecting step in the slow motion reproduction mode, and in response to said detection, for changing to outputting a next field of data.

In this constitution in the digital VTR for recording and reproducing the data coded at high efficiency in a plurality of field units, slow reproduction in the field unit is realized by detecting whether all data corresponding to the quantity of data of one field are produced in the high efficiency coded state at the time of reproduction or not, and controlling the field for producing to outside depending on the result of detection.
Fig. 1 is a block diagram of a signal processing method of digital VTR in the first embodiment of the invention;
Fig. 2 is an explanatory diagram showing the recording pattern on the tape;
Fig. 3 is an explanatory diagram showing the composition of sync block and reading direction for correction error;
Fig. 4 is an explanatory diagram showing the relation of the reproduction data from the tape, output of con-cealment memory, and the field being output to the outside, in ordinary reproduction according to the invention,
Fig. 5 is an explanatory diagram showing the relation of the reproduction data from the tape, output of con-cealment memory, and the field being output to the outside, in slow reproduction according to the invention,
Fig. 6 is an explanatory diagram showing the data corresponding to 1/2 frame on the tape,
Fig. 7 is an explanatory diagram showing the relation of the reproduction data from the tape, output of concealment memory, and field being output to the outside, in slow reproduction in reverse direction according to the invention,
Fig. 8 is an explanatory diagram showing the control method in reproduction in reverse direction of the invention,
Fig. 9 is a block diagram showing the constitution of a signal processing method of digital VTR in a second embodiment of the invention, and
Fig. 10 is a block diagram showing the constitution of a signal processing method of digital VTR in a third embodiment of the invention.

Referring now to the drawings, some of the embodiments of the invention are described in detail below. In the constitutional diagrams of the embodiments, blocks identified with same reference numbers are not explained repeatedly.

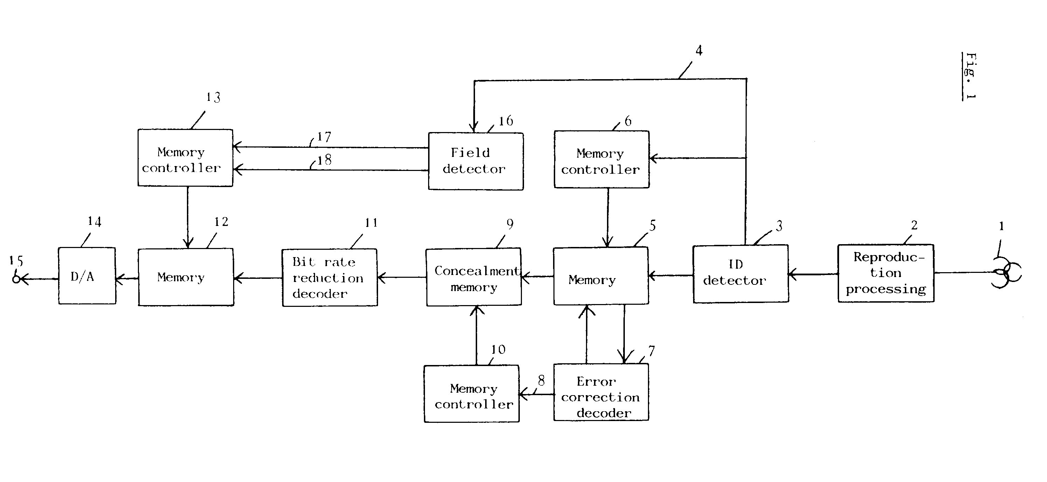

Fig. 1 shows the constitution of signal processing method of digital VTR in a first embodiment of the invention. In Fig. 1, numeral 1 is a reproducing head, 2 is a reproducing processing circuit, 3 is an ID detector for detecting identification information (ID) added in the unit of recording block (sync block) when recording, 4 is an ID, 5 is a memory for error correction, 6 is a memory controller for controlling the memory 5, 7 is an error correction decoder for correcting a correctable error, on the basis of parity for error correction added when recording, and detecting an uncorrectable error to issue a flag 8 indicating the presence of the error, 9 is a concealment memory having a capacity of one frame for concealing the error according to the flag, 10 is a memory controller for controlling the concealment memory 9, 11 is a bit rate reduction decoder for decoding the data coded at bit rate reduction when encode recording, 12 is a memory of one frame or more for interlacing the data of one frame reproduced in a form of non-interlacing and producing in the field unit, 13 is a memory controller for controlling the memory 12, 14 is a D/A converter for converting a digital signal into an analog signal, and 15 is an output terminal. Besides, 16 is a field detector for detecting the ID of the reproduction signal and controlling the writing into the memory 12, 17 is a write control signal into the memory 11, and 18 is an address control signal for changing over the address of the memory 12 by controlling the memory controller 13 depending on the play direction. The operation of this embodiment is described below.

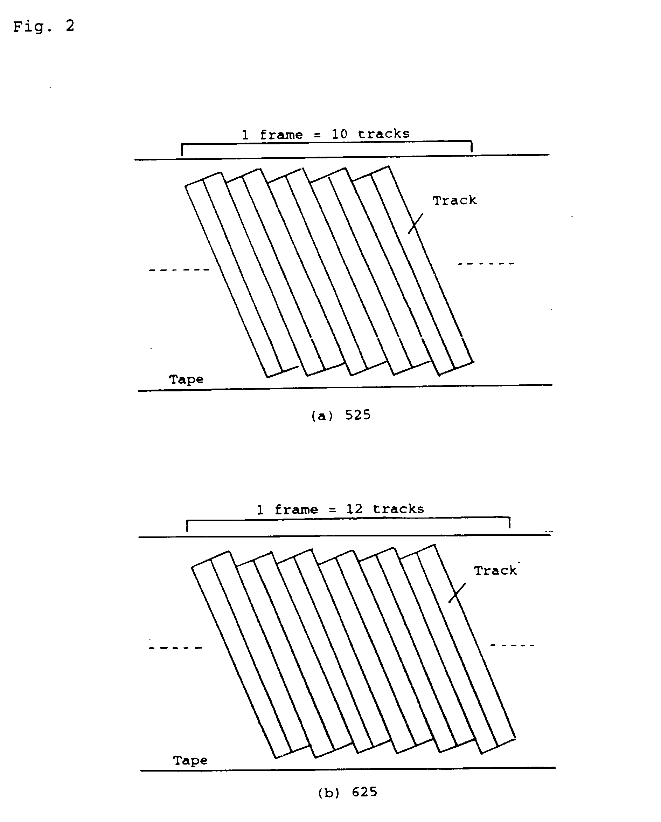

In the digital VTR of the embodiment, two fields are joined into a frame, and bit rate reduction is executed in the unit of one frame. As the method of bit rate reduction, the data quantity is controlled in the specified unit, and coding is controlled so that the data quantity coding the data of the portion of one field may come to be 1/2 of the data quantity coding the data of the portion of one frame. Then, as shown in Fig. 2(a), (b), the data coded by bit rate reduction is divided into 10 tracks (525), 12 tracks (625), and recorded on the tape.

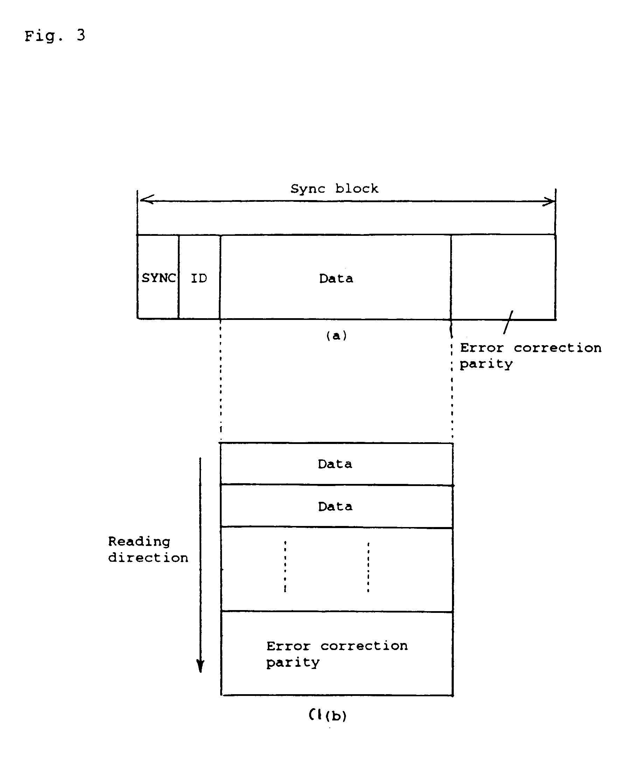

The operation in reproduction is explained briefly below. The signal reproduced from the reproducing head 1 is subjected to reproducing processing in the reproduction processing circuit 2, and the reproduction data is fed into the ID detector 3 in the unit of sync block. The sync block is the minimum unit for recording on the tape, and as shown in Fig. 3(a), it is composed of synchronous pattern (SYNC), ID, data, and error correction parity. In normal play, the sync blocks are reproduced in the sequence of being recorded, but in trick play, they are not reproduced in the recording sequence. Therefore, the ID contains the information (track number, sync block number) for writing the reproduced sync blocks into correct memory addresses at trick play. In the ID detector 3, the writing address into the memory 5 is determined from the ID of the reproduced sync blocks, and the data is written into the memory 5 in the sync block unit on the basis of the determined address.

In the memory 5, consequently, the data written in the sync block unit is read out into the direction shown in Fig. 3(b), and the error is corrected by the error correction decoder 7. Here, error correction by error correction decoder 7 is executed by using the error correction parity added in the direction shown in Fig. 3(b), for the specified number of sync blocks. Next, the data not corrected by the error correction decoder 7 is concealed in the concealment memory 9 on the basis of the flag 8. In the memory controller 10, by not writing the error data into the concealment memory 9, the error data is replaced with the corresponding correct data one frame before. Finally, the coded data is decoded into the original data in the bit rate reduction decoder 10, and the data reproduced in the frame unit is produced from the memory 12 in the field unit.

The method of realizing slow play in this embodiment is explained. First of all, the case of reproduction in normal direction is shown, and succeedingly the case of reproduction in reverse direction is described.

### (Reproduction in normal direction)

Slow play is realized as the field unit using the concealment memory 9, memory 12, and field detector 16. The field detector 16 detects the ID of the reproduction signal, and detects in the unit of one field, that is, 1/2 frame unit. The operation of the field detector 16 is explained. Hereinafter, the reproduced data of the first half frame is supposed to be fh, and the data of the second half frame to be sh, field 0 to be 0, and field 1 to be 1.

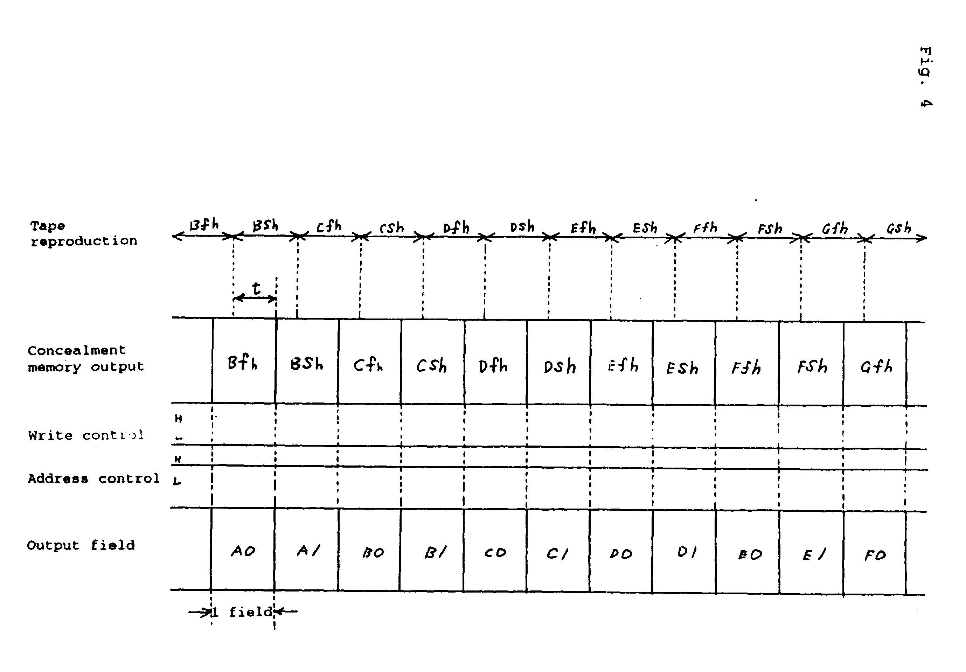

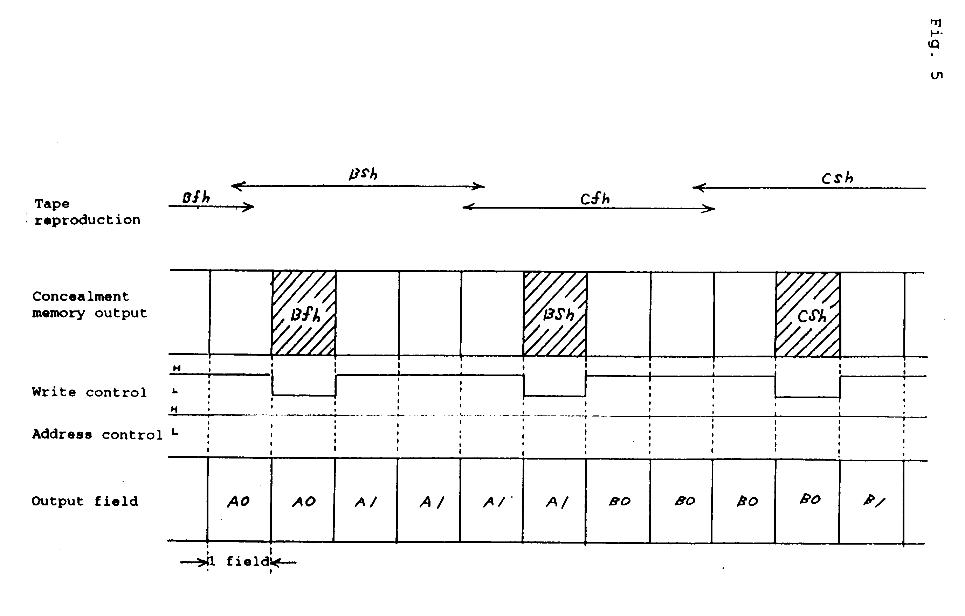

Fig. 4 and Fig. 5 are diagrams showing the relation of the reproduction data from the tape in the track unit, output of concealment memory, and field being output to the outside, respectively in normal play and 1/4 speed slow play. The reproduction data from the tape is reproduced in the track unit, and is produced in the field unit from the concealment memory 9. The write control signal 17 is a control signal for controlling whether or not to write data in the memory 12, and is set in the field unit. The write control signal 17 is set at L when writing data into the memory 12, and set to H when not writing data into the memory 12. In the memory controller 13, writing of data into the memory 12 is controlled on the basis of the write control signal 17.

In the first place, in normal play, since the data of each track is reproduced continuously, the write control signal 17 is set at L as shown in Fig. 4, and the output signal of the concealment memory 9 is always written into the memory 12. Therefore, the fields are output continuously in the sequence of A0, A1, B0, B1 and so forth.

Next, in slow play as shown in Fig. 5, the data reproduced from the tape is written into the memory 5 to correct error, and the error is concealed in the concealment memory 9, while the ID of the reproduction data is detected in the field detector, thereby distinguishing whether the first half frame or second half frame of one frame has been reproduced. Until the data of half frame is reproduced, the write control signal 17 is set at L and data is not written into the memory 12, and the same field is repeatedly output from the memory 12. When the data of half frame is reproduced, the write control signal 17 is set to L, and the data in the concealment memory 9 is written into the memory 12, and at the same time the field being output from the memory 12. Thereafter, in the same manner, the outputting fields are changed over.

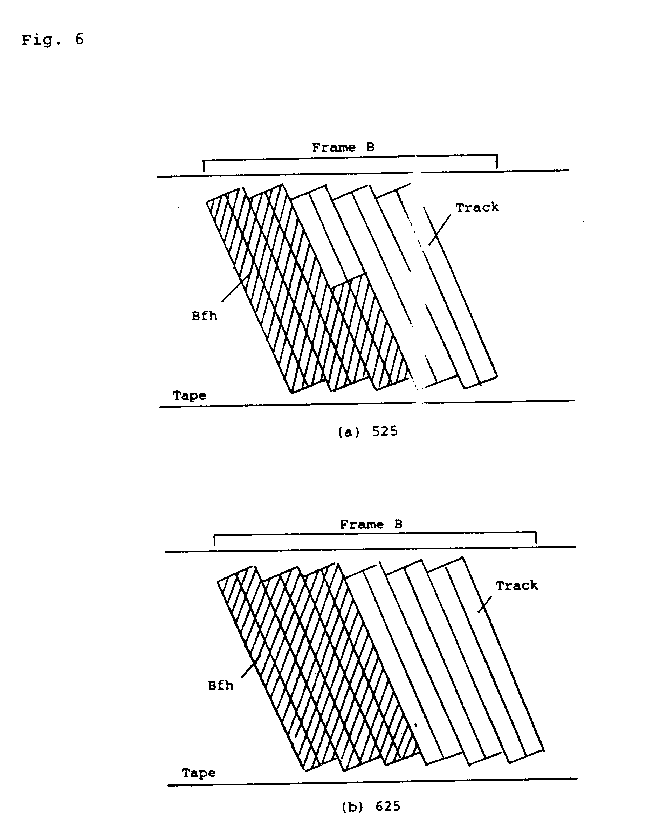

The above operation is described in detail below by reference to Fig. 5. After all data of Bfh is written into the concealment memory 9 and delivered to the memory 12, until the data of Bsh is completely reproduced, the write control signal 17 is set at H, and the field A1 is repeatedly sent out from the memory 12. After the data of Bsh is reproduced, corrected of error and written into the concealment memory 9, the write control signal 17 is set at L, and the data of Bsh is written into the memory 12. When Bsh is entirely written into the memory 12, since the whole data of frame B is written in the memory 12, thereafter the data of field 0 (field B0) of frame B is read out from the memory 12. Here, the end of reproduction of Bsh data is detected by referring to the ID of the sync block corres-ponding to Bsh by the ID detector 3. In Fig. 6 (a), (b), the data corresponding to Bfh, Bsh recorded on a tape in the case of 525, 625 are respectively shown.

### (Reproduction in reverse direction)

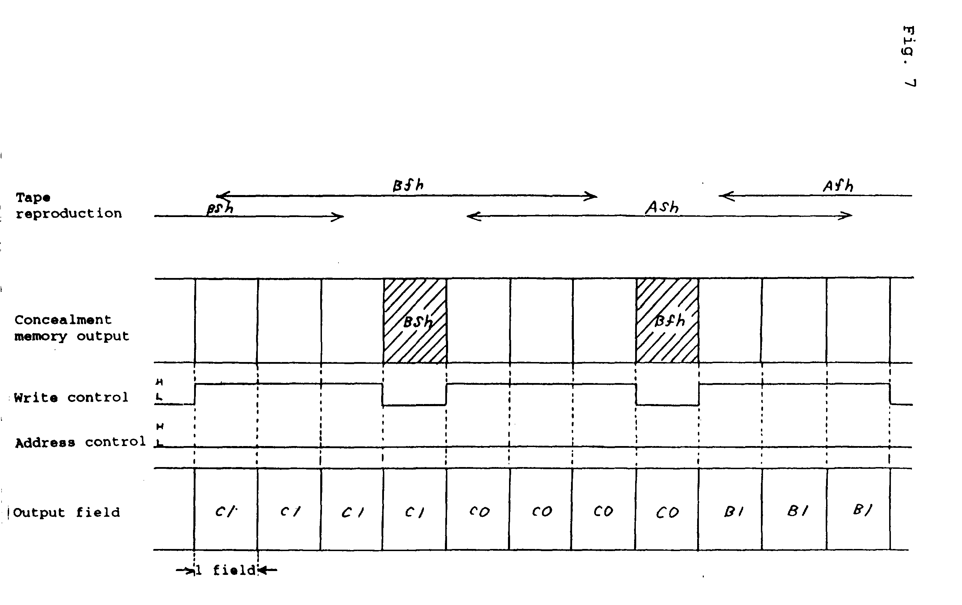

In reproduction in normal direction, as stated herein above, the fields are sent out in the sequence of A0, A1, B0, B1 and so forth, but in reproduction in reverse direction, to the contrary, they must be sent out in the sequence of B1, B0, A1, A0 and so forth. In the memory 12, however, the data are written in the sequence of the second half frame and first half frame of one frame, and, after being written for the portion of one frame, it is output in the field unit, and regardless of reproduction in reverse direction, the data is reproduced in the sequence of B0, B1, A0, A1 and so forth. Therefore, in order to change over the output sequence of the fields corresponding to one frame in reproduction in reverse direction, an address control signal 18 (normal direction: H, reverse direction: L) is sent from the field detector 16 to the memory controller 13, and the address of the memory 12 is controlled so as to change the reading sequence of the field from the reproduction in normal direction. Fig. 7 shows the operation in slow play in reverse direction in the reproduction processing method of digital VTR of the invention, in which the address control signal is L, and the fields are output in the reverse sequence in normal direction. In this method, slow play is realized in the correct sequence of fields in reverse direction.

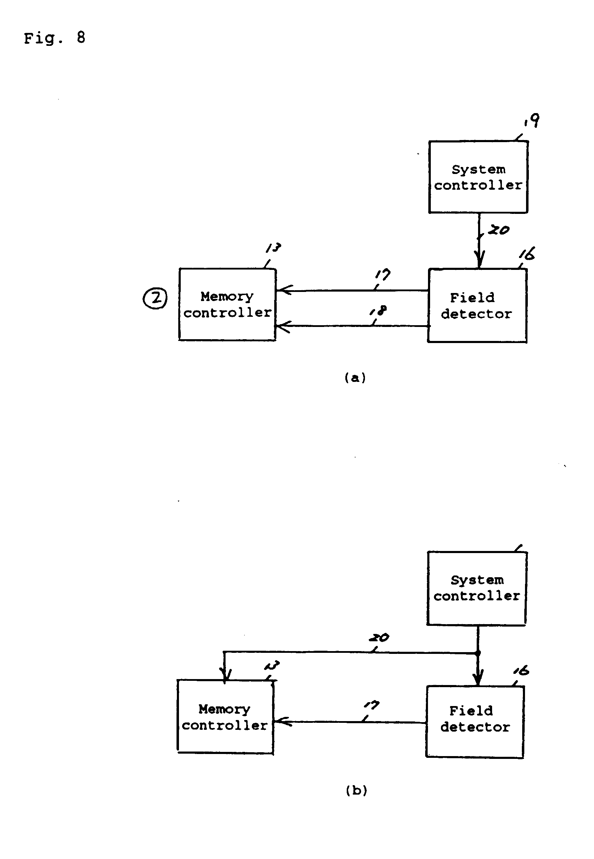

Here, by detecting the ID of the reproduced sync block alone, it is difficult to detect that the tape running direction is in reverse direction. Therefore, as shown in Fig. 8(a), tape running information 20 is sent from the system controller 19 for controlling the entire digital VTR system to the field detector 16, and in the field detector 16, from the reproduced ID and tape running information 20, the address control signal 18 is created. In other method, as shown in Fig. 8(b), by sending tape running information 20 from the system controller 19 to the field detector 16 and memory controller 13, correct signal processing is realized in the reverse direction.

According to this embodiment, as described herein, it is possible to realize slow play in the field unit using the memories for error correction and error concealment, and the memory for converting frame into field.

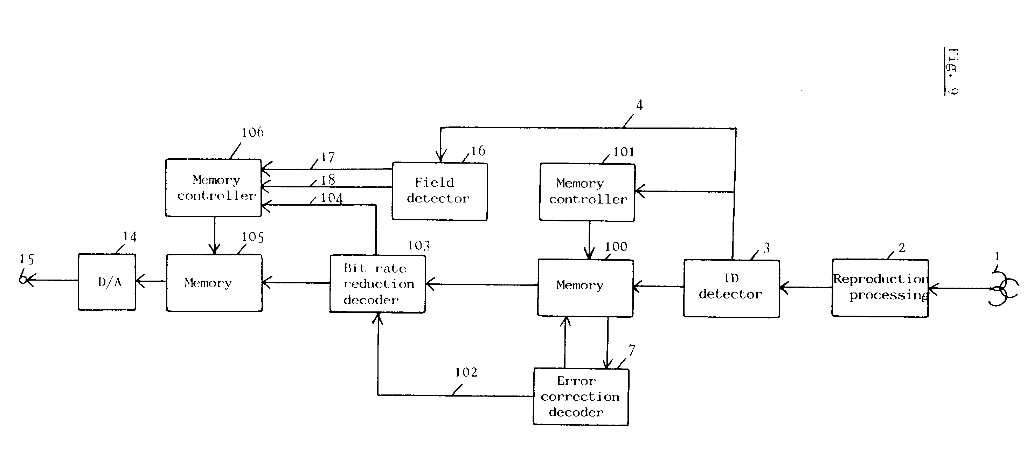

Fig. 9 shows a constitution of a signal processing method of digital VTR in a second embodiment of the invention. In Fig. 9, numeral 100 is a memory for error correction having a capacity for one frame, 101 is a memory controller of the memory 100, 102 is a error flag, 103 is a bit rate reduction decoder for decoding at bit rate reduction and producing a error flag 104 telling the error position after bit rate reduction decoding on the basis of the flag 102, 105 is a memory for concealing the error on the basis of the flag 104 and simultaneously interlacing the data of one frame reproduced in a non-interlaced form for producing in the field unit, and 106 is a memory controller of the memory 105.

In this embodiment, the method of control for slow play is same as in the first embodiment, but what is different from the first embodiment is that the concealment of the error that could not be corrected is done in the memory 105 for converting frame into field. First, in the bit rate reduction decoder 103, while decoding on the basis of the flag 102, the flag 104 telling the error position in the data after being decoded is sent out. In the memory 105, the data in the frame unit is converted into the data in the field unit, while the error is concealed according to the flag 104.

As explained herein, according to this embodiment, if the error cannot be concealed in the coded state, or when it is possible to conceal more precisely by concealing after decoding the data once coded at bit rate reduction, it is possible to conceal the error using the memory for converting the frame into the field.

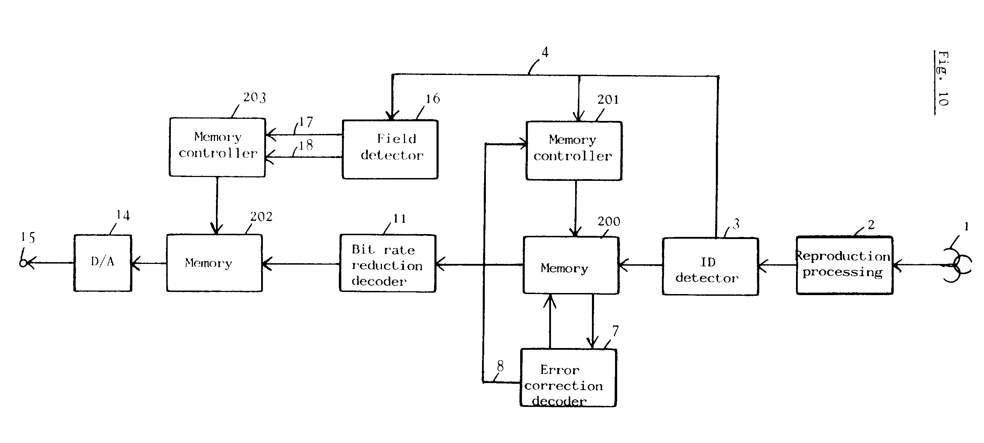

Fig. 10 shows a constitution of a signal processing method of digital VTR in a third embodiment of the invention. In Fig. 10, numeral 200 is a memory for error correction and concealment having a capacity for two frames, 201 is a memory controller for controlling the memory 200, 202 is a memory for interlacing the data of one frame reproduced in a non-interlaced state and producing in the field unit, and 203 is a memory controller for controlling the memory 202.

In this embodiment, the control method for slow play is same as in the first and second embodiments, and what is different is that error correction and concealment are realized using the memory 200. The memory 200 is composed of two one-frame memories, 200(a), 200(b), and the memories for error correction are changed over in every frame. When errors of n frames are corrected using 200(a), data of n-1 frames are saved in 200(b). Therefore, by reading out correct data from 200(a) and reading out the data of 200(b) instead of the error data that has not been corrected, the error concealment is realized. In this embodiment, as the memory for storing the reproduction data, since the capacity is worthy of two frames, it is applicable even if the head crosses many tracks, such as in slow play in reverse direction.

In the foregoing embodiments, the memory for one frame or two frames is used as the memory for storing the reproduction data and changing over the fields, but it is possible to select the memory quantity depending on the required speed or direction.

Furthermore, in the above embodiments, first the frame is composed of the data in two fields, then bit rate reduction is done, but the invention is also applicable where bit rate reduction is executed in much more field units.

## Claims

1. A method of reproducing a digital video signal from coded video data recorded on a recording medium, said coded video data having been obtained by joining every two fields of digital video signals into a frame of digital video signals and a bit rate reduction coding the frame of digital video signals to be a frame of coded video data divided into recording blocks, said method comprising the steps of:
reproducing the coded video data from the recording medium on a recording block by recording block basis;
storing the reproduced recording blocks sequentially in a first memory (5);
decoding the reproduced recording blocks stored in the first memory to obtain reproduced digital video signals;
storing the reproduced digital video signals in a second memory (12);
detecting a timing at which recording blocks comprising a quantity of data corresponding to half a frame of coded video data have been reproduced from the recording medium in a slow motion reproduction mode; and
controlling the second memory (12) to output one field of reproduced digital signals repeatedly from said second memory until said timing detected by the detecting step in the slow motion reproduction mode, and in response to said detection, for changing to outputting a next field of data.

2. A. method according to claim 1, wherein said controlling step determines the field to be outputted from the second memory (12) in the slow motion reproduction mode in response to said timing detected by the detecting step.

3. A method according to claim 1, wherein said controlling step controls the second memory (12) to renew the field to be outputted from the second memory at intervals of a field period in a normal reproduction mode.

4. A method according to claim 1, wherein said second memory (12) has a storage capacity for storing two fields of reproduced digital video signals, and said controlling step controls the second memory to output the stored digital video signals in a sequential order from an earliest reproduced field in a forward reproduction mode.

5. A method according to claim 4, wherein said controlling step controls the second memory (12) to output the stored digital video signals in an order reverse to said sequential order in a reverse reproduction mode.

## Patentansprüche

1. Verfahren zum Wiedergeben eines digitalen Videosignals aus kodierten Videodaten, die auf einem Aufzeichnungsmedium aufgezeichnet sind, wobei die kodierten Videodaten erzeugt wurden, indem alle zweiten Felder digitaler Videosignaldaten zu einem Rahmen digitaler Videosignaldaten zusammengefaßt wurden und der Rahmen digitaler Videosignaldaten Bitraten-Reduktionskodierung unterzogen wurde, so daß ein Rahmen kodierter Videodaten entstand, der in Aufzeichnungsblöcke unterteilt ist, wobei das Verfahren die folgenden Schritte umfaßt:
Wiedergeben der kodierten Videodaten von dem Aufzeichnungsmedium Aufzeichnungsblock für Aufzeichnungsblock;
sequentielles Speichern der wiedergegebenen Aufzeichnungsblöcke in einem ersten Speicher (5);
Dekodieren der in dem ersten Speicher gespeicherten wiedergegebenen Aufzeichnungsblöcke, um wiedergegebene digitale Videosignale herzustellen;
Speichern der wiedergegebenen digitalen Videosignale in einem zweiten Speicher (12);
Erfassen eines Zeitpunkts, zu dem Aufzeichnungsblöcke, die eine Menge an Daten umfassen, die einem halben Rahmen kodierter Videodaten entsprechen, von dem Aufzeichnungsmedium in einem Zeitlupen-Wiedergabebetrieb wiedergegeben worden sind; und
Steuern des zweiten Speichers (12), so daß ein Feld wiedergegebener digitaler Signale bis zu dem im Erfassungsschritt erfaßten Zeitpunkt im Zeitlupen-Wiedergabebetrieb wiederholt aus dem zweiten Speicher ausgegeben wird, und in Reaktion auf die Erfassung zur Ausgabe eines nächsten Feldes von Daten übergegangen wird.

2. Verfahren nach Anspruch 1, wobei in dem Steuerschritt das aus dem zweiten Speicher (12) im Zeitlupen-Wiedergabebetrieb auszugebende Feld in Reaktion auf den im Erfassungsschritt erfaßten Zeitpunkt bestimmt wird.

3. Verfahren nach Anspruch 1, wobei in dem Steuerschritt der zweite Speicher (12) so gesteuert wird, daß das aus dem zweiten Speicher ausgegebene Feld in Intervallen einer Feldperiode in einem normalen Wiedergabebetrieb erneuert wird.

4. Verfahren nach Anspruch 1, wobei der zweite Speicher (12) eine Speicherkapazität zum Speichern von zwei Feldern wiedergegebener digitaler Videosignale aufweist, und in dem Steuerschritt der zweite Speicher so gesteuert wird, daß die gespeicherten digitalen Videosignale in einer sequentiellen Reihenfolge von einem am frühesten wiedergegebenen Feld ausgehend in einem Vorwärtswiedergabebetrieb ausgegeben werden.

5. Verfahren nach Anspruch 4, wobei in dem Steuerschritt der zweite Speicher (12) so gesteuert wird, daß die gespeicherten digitalen Videosignale in einer Reihenfolge entgegengesetzt zu der sequentiellen Reihenfolge in einem Rückwärtswiedergabebetrieb ausgegeben werden.

## Revendications

1. Méthode de reproduction d'un signal vidéo numérique à partir de données vidéo codées enregistrées sur un support d'enregistrement, lesdites données vidéo codées ayant été obtenues en groupant chaque paire de zones de signaux vidéo numériques en une trame de signaux vidéo numériques et en codant par réduction de débit binaire la trame de signaux vidéo numériques pour qu'elle soit une trame de données vidéo codées divisées en blocs d'enregistrement, ladite méthode comprenant les étapes de :
reproduction des données vidéo codées à partir du support d'enregistrement sur une base bloc d'enregistrement à bloc d'enregistrement;
stockage des blocs d'enregistrement reproduits séquentiellement dans une première mémoire (5);
décodage des blocs d'enregistrement reproduits stockés dans la première mémoire pour obtenir des signaux vidéo numériques reproduits;
stockage des signaux vidéo numériques reproduits dans une seconde mémoire (12);
détection d'un temps de synchronisation auquel des blocs d'enregistrement comprenant une quantité de données correspondant à une demi-trame de données vidéo codées ont été reproduits à partir du support d'enregistrement dans un mode de reproduction à mouvement lent; et,
commande de la seconde mémoire (12) pour sortir une zone de signaux numériques reproduits de façon répétitive à partir de ladite seconde mémoire jusqu'audit temps de synchronisation détecté par l'étape de détection dans le mode de reproduction à mouvement lent et, en réponse à ladite détection, pour passer à la sortie d'une zone suivante de données.

2. Méthode selon la revendication 1, dans laquelle ladite étape de commande détermine la zone à sortir de la seconde mémoire (12) dans le mode de reproduction à mouvement lent en réponse audit temps de synchronisation détecté par l'étape de détection.

3. Méthode selon la revendication 1, dans laquelle ladite étape de commande commande la seconde mémoire (12) pour renouveler la zone à sortir de la seconde mémoire à intervalles d'une période de zone dans un mode de reproduction normal.

4. Méthode selon la revendication 1, dans laquelle ladite seconde mémoire (12) a une capacité de mémoire pour stocker deux zones de signaux vidéo numériques reproduits, et ladite étape de commande commande la seconde mémoire pour sortir les signaux vidéo numériques stockés dans un ordre séquentiel à partir d'une zone reproduite la plus ancienne dans un mode de reproduction avant.

5. Méthode selon la revendication 4, dans laquelle ladite étape de commande commande la seconde mémoire (12) pour sortir les signaux vidéo numériques stockés dans un ordre inverse dudit ordre séquentiel dans un mode de reproduction inverse.
